# FASCICULE DE BREVET EUROPEEN

(11) **EP 3 887 660 B1**
(45) Date de publication et mention de la délivrance du brevet: **30.08.2023**
(21) Numéro de dépôt: 19805706.9
(22) Date de dépôt: 25.11.2019
(51) Int. Cl.: F01N 3/20, F01N 9/00, F01N 3/28, F02D 41/00, F02D 41/02, F02D 17/02

(54) **PROCÉDÉ DE COMMANDE D'UN DISPOSITIF DE TRACTION POUR VÉHICULE AUTOMOBILE COMPRENANT UN DISPOSITIF DE TRAITEMENT DES GAZ DE COMBUSTION CHAUFFÉ ÉLECTRIQUEMENT**
STEUERUNGSVERFAHREN EINER ANTRIEBSVORRICHTUNG FÜR EIN AUTOMOBILES FAHRZEUG BEINHALTEND EIN ELEKTRISCH BEHEIZTES ABGASNACHBEHANDLUNGSSYSTEM
CONTROL METHOD OF A TRACTION DEVICE FOR AN AUTOMOBILE VEHICLE COMPRISING AN ELECTRICALLY HEATED EXHAUST GAS AFTERTREATMENT SYSTEM

(30) Priorité: 27.11.2018 FR 1871888
(43) Date de publication de la demande: 06.10.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: BOIARCIUC, Andrei-Alexandru, 78180 MONTIGNY LE BRETONNEUX (FR)
(74) Mandataire: Renault Group
(86) Numéro de dépôt international: PCT/EP2019/082361
(87) Numéro de publication internationale: WO 2020/109204

(56) Documents cités:
- EP-A1- 0 852 289
- US-A1- 2003 154 711
- US-A1- 2004 216 449
- US-A1- 2017 305 411
- US-B2- 9 970 364

## Description

La présente invention concerne, de manière générale, la réduction des émissions de polluants par un moteur à combustion interne de véhicule automobile.

Plus particulièrement, l'invention se rapporte à un procédé de commande d'un dispositif de traction pour véhicule automobile pour la réduction des émissions de polluants par un moteur à combustion interne, notamment à allumage commandé ou à allumage par compression, ainsi qu'à un dispositif de traction associé.

Par moteur à allumage commandé, on entend tout moteur à combustion interne dont la combustion est initiée par une bougie dans les chambres de combustion du moteur, par exemple, un moteur à essence, alcool, GPL ou gaz.

Par moteur à allumage par compression, on entend tout moteur à combustion interne dont la combustion est initiée par l'augmentation de la pression dans les chambres de combustion du moteur, par exemple un moteur diesel consommant du gazole.

Généralement, au moins un dispositif de traitement des gaz de combustion, dit catalyseur ou pot catalytique, est monté à l'échappement du moteur et traite les gaz de combustion tels que les hydrocarbures, monoxydes de carbone, ou encore oxydes d'azotes, émis par le moteur.

Par exemple dans le cas d'un moteur à allumage commandé, il peut s'agir d'un catalyseur trois voies. Par exemple dans le cas d'un moteur à allumage par compression, il peut s'agir d'un catalyseur d'oxydation.

L'efficacité du catalyseur est liée à sa température. Lorsque le catalyseur est froid, c'est-à-dire à une température inférieure à sa température de mise en action, celui-ci n'est pas ou peu actif. En conséquence, le démarrage à froid et le fonctionnement lors des premières secondes du moteur engendrent une émission importante de polluants.

Un réglage du moteur couramment utilisé consiste à dégrader le rendement de la combustion du moteur. Dans le cas d'un moteur à allumage commandé, cela consiste généralement à ajuster l'avance du moteur à l'allumage, et à décaler ainsi la combustion vers la détente des gaz, conventionnellement appelé sous-avance. Il en découle une augmentation de la température des gaz d'échappement, et par conséquent de celle du catalyseur qui atteint plus rapidement sa température de mise en action. Dans le cas d'un moteur à allumage par compression, le même décalage de la combustion peut généralement être obtenu en prévoyant une phase d'injection tardive de carburant dans les cylindres du moteur.

Toutefois, malgré l'augmentation avantageuse de température du catalyseur, le fonctionnement en sous-avance ou avec une injection retardée engendre à la fois une instabilité du moteur, une surconsommation de carburant et surtout une augmentation d'émission des polluants. Par exemple, dans le cas d'un moteur à allumage commandé, le moteur requiert un débit d'air plus grand, et pour maintenir une richesse équivalente un débit de carburant plus grand, ce qui entraîne une augmentation du débit d'échappement et, par conséquent, du débit de polluants émis. Dans le cas d'un moteur à allumage par compression, le débit d'air aspiré par le moteur n'est généralement pas modifié, mais le débit de carburant nécessaire à la production du couple est plus élevé, le rendement de combustion est dégradé, et les émissions de polluants sont augmentées.

Une autre stratégie permettant de réduire le fonctionnement du moteur avec un rendement de combustion dégradé consiste à équiper le dispositif de traction du véhicule d'un catalyseur chauffé électriquement dans lequel le chauffage est réalisé par convection entre une grille chauffante et le ou les monolithes formant le catalyseur.

La qualité de l'échange thermique entre la grille et le catalyseur est donc primordiale pour atteindre rapidement la température de mise en action du catalyseur.

Comme cela est décrit dans le document US 5 357 752, une solution consiste à injecter un débit d'air supplémentaire en amont du catalyseur au travers d'un espace annulaire située à l'entrée du catalyseur.

Cependant, cette solution reste complexe et coûteuse, puisqu'elle requiert l'installation de composants additionnels et la modification du catalyseur pour implanter l'arrivée d'air. De plus, elle engendre l'encombrement et l'augmentation de la masse du dispositif de traction.

Le document US 2017/305411 A1 décrit un procédé pour contrôler le fonctionnement d'un moteur de véhicule hybride, le moteur de véhicule comprenant un ou plusieurs cylindres dédiés à la recirculation des gaz d'échappement vers un collecteur d'admission. Dans un exemple, lors d'un démarrage à froid du moteur ou d'un autre événement où la température d'un ou plusieurs catalyseurs d'échappement est inférieure à une température nécessaire à l'activité catalytique, l'injection de carburant vers le ou les cylindres dédiés de recirculation des gaz d'échappement est maintenue coupée, tandis que les soupapes d'admission et d'échappement sont maintenues activées. Ceci permet aux cylindres dédiés de recirculation des gaz d'échappement d'acheminer l'air vers le collecteur d'admission du moteur, ce qui entraîne une stoechiométrie des gaz d'échappement pouvant servir à chauffer le catalyseur. De cette façon, lors d'événements de démarrage à froid et d'autres événements où la température d'un ou plusieurs catalyseurs d'échappement est inférieure à une température d'activité catalytique, les problèmes de stabilité de combustion peuvent être évités et le ou les catalyseurs d'échappement peuvent être rapidement chauffés, réduisant ainsi les émissions d'échappement indésirables.

Le document US 9 970 364 B2 décrit un véhicule comprenant un générateur, un moteur à combustion interne pour entraîner le générateur, un dispositif catalytique et un contrôleur pour contrôler le fonctionnement du moteur à combustion interne.

Le document US 2003/154711 décrit un système de commande d'un moteur de véhicule comprenant un convertisseur catalytique. Un contrôleur désactive au moins un des cylindres du moteur avant que le convertisseur catalytique n'atteigne la température d'allumage pour accélérer l'allumage du convertisseur catalytique.

Le document US2004/216449 décrit l'activation et la désactivation d'un ou plusieurs cylindres du moteur pour améliorer l'efficacité des dispositifs de post-traitement.

Le document EP 0 852 289 décrit un système dans lequel on coupe l'alimentation en carburant d'au moins un des cylindres.

L'invention a donc pour but de remédier à ces inconvénients et de proposer un procédé de commande d'un dispositif de traction permettant de favoriser le chauffage du catalyseur et d'atteindre plus rapidement la température de mise en action du catalyseur sans augmenter l'émission de polluants.

Il est donc proposé un procédé de commande d'un dispositif de traction pour véhicule automobile comprenant un moteur à combustion interne, le moteur comportant une pluralité de cylindres chacun pourvu d'au moins une soupape d'admission d'air, d'au moins une soupape d'échappement des gaz de combustion générés par le moteur à combustion interne et d'un injecteur de carburant, et un dispositif de traitement des gaz de combustion actif à partir d'une température de mise en action, ledit dispositif de traitement étant placé en aval de la soupape d'échappement.

En outre, le dispositif de traction comprend un moyen de chauffage électrique du dispositif de traitement des gaz de combustion et un dispositif de commande. On compare la température du dispositif de traitement des gaz de combustion avec la température de seuil de mise en action et, tant que la température du dispositif de traitement des gaz de combustion est inférieure à la température de seuil, on active le moyen de chauffage du dispositif de traitement des gaz de combustion et coupe l'alimentation en carburant dans un ou plusieurs des cylindres du moteur.

Avantageusement, le dispositif de commande peut réaliser les étapes suivantes : la détermination du régime du dispositif de traction et de l'enfoncement d'une pédale d'accélérateur ; 1e calcul d'une consigne de couple du dispositif de traction en fonction du régime du dispositif de traction et de l'enfoncement de la pédale déterminés ; et le contrôle de l'arrêt de l'alimentation en carburant d'un ou plusieurs des cylindres en fonction de la consigne de couple du dispositif de traction calculée.

De manière encore plus avantageuse, le procédé de commande peut comprendre le contrôle par le dispositif de commande du pourcentage d'ouverture des soupapes d'admission et d'échappement des cylindres dont l'alimentation en carburant est coupée.

Selon une autre caractéristique avantageuse, le procédé de commande peut comprendre la répartition par le dispositif de commande du couple du dispositif de traction à fournir entre un moteur électrique du dispositif de traction et le moteur à allumage commandé, lorsque la température du dispositif de traitement est inférieure à la température de seuil de mise en action.

De préférence, le dispositif de commande coupe l'alimentation en carburant dans l'ensemble des cylindres du moteur à allumage commandé et la totalité du couple du dispositif de traction est fournie par le moteur électrique, lorsque la température du dispositif de traitement est inférieure à la température de seuil de mise en action.

Préférablement, le procédé de commande comprend la détermination par le dispositif de commande de l'écart entre la température du dispositif de traitement et la température de seuil de mise en action et la répartition du couple du dispositif de traction à fournir respectivement par le moteur électrique et le moteur à combustion interne en fonction de l'écart déterminé.

L'invention concerne également un dispositif de traction pour véhicule automobile comprenant un moteur à combustion interne, le moteur comportant une pluralité de cylindres chacun pourvu d'au moins une soupape d'admission d'air, d'au moins une soupape d'échappement des gaz de combustion générés par le moteur et d'un injecteur de carburant, et un dispositif de traitement des gaz de combustion actif à partir d'une température de mise en action, ledit dispositif de traitement étant placé en aval de la soupape d'échappement.

En outre, le dispositif de traction comprend un moyen de chauffage électrique dudit dispositif de traitement, un capteur de température configuré pour relever la température dudit dispositif de traitement et un dispositif de commande configuré pour activer le moyen de chauffage du dispositif de traitement et couper l'alimentation en carburant dans un ou plusieurs des cylindres du moteur, tant que la température du dispositif de traitement est inférieure à la température de seuil de mise en action.

De préférence, le dispositif de commande est configuré pour : déterminer le régime du dispositif de traction et de l'enfoncement d'une pédale d'accélérateur ; calculer une consigne de couple du dispositif de traction en fonction du régime et de l'enfoncement déterminés ; et contrôler l'arrêt de l'alimentation en carburant dans un ou plusieurs des cylindres en fonction de la consigne de couple du dispositif de traction calculée.

Avantageusement, le dispositif de commande peut être apte à contrôler le pourcentage d'ouverture des soupapes d'admission et d'échappement des cylindres dont l'alimentation en carburant est coupée.

De manière encore plus avantageuse, le dispositif de traction peut comprendre un moteur électrique, le dispositif de commande étant configuré pour ordonner la traction du véhicule automobile au moins en partie par un moteur électrique, tant que la température du dispositif de traitement est inférieure à la température de seuil de mise en action.

De préférence, le dispositif de commande est configuré pour couper l'alimentation en carburant dans l'ensemble des cylindres du moteur à combustion interne et ordonner la fourniture de la totalité du couple du dispositif de traction par le moteur électrique, lorsque la température du dispositif de traitement est inférieure à la température de seuil de mise en action.

De préférence, le dispositif de commande est configuré pour déterminer l'écart entre la température du dispositif de traitement et la température de seuil de mise en action et déterminer la répartition du couple à fournir respectivement par le moteur électrique et le moteur à combustion interne en fonction de l'écart déterminé.

L'invention concerne, en outre, un véhicule automobile comprenant un dispositif de traction comme décrit précédemment.

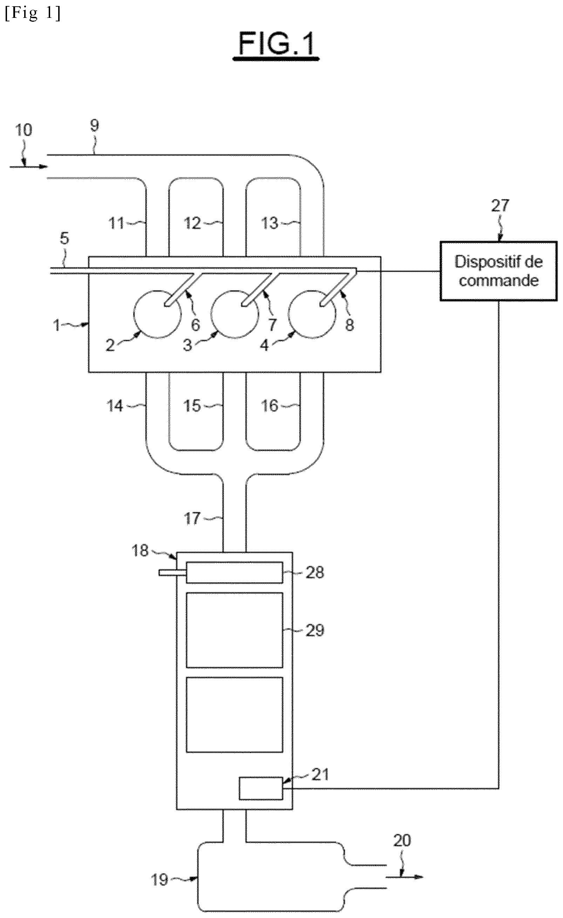

D'autres buts, avantages et caractéristiques ressortiront de la description qui va suivre, donnée à titre purement illustratif et faite en référence aux dessins annexés sur lesquels :
[Fig 1]
   illustre schématiquement un dispositif de traction comprenant un moteur à combustion interne du type à allumage commandé relié à un dispositif de traitement des gaz de combustion générés par le moteur selon un mode de réalisation de l'invention ;
[Fig 2]
   est une vue en coupe d'un cylindre de moteur à allumage commandé tel qu'illustré à la figure 1 ; et
[Fig 3]
   illustre un procédé de commande d'un dispositif de traction pour véhicule automobile, comprenant un dispositif de traitement des gaz de combustion chauffé électriquement.

Comme illustré à la figure 1, un moteur à combustion interne 1 d'un dispositif de traction comprend une pluralité de cylindres 2, 3 et 4. Dans l'exemple illustré, le moteur 1 est pourvu de trois cylindres 2, 3 et 4. Dans l'exemple illustré par la figure 1 le moteur est du type à allumage commandé, mais il pourrait aussi s'agir d'un moteur à allumage par compression sans sortir du cadre de l'invention.

Chaque cylindre 2, 3 et 4 comprend un injecteur de carburant, respectivement 6, 7 et 8, pouvant être alimenté en carburant par un conduit 5, par exemple une rampe commune d'alimentation en carburant 5.

Un conduit d'alimentation 9, alimenté en air 10, débouche avantageusement dans chaque cylindre 2, 3 et 4 par l'intermédiaire d'un conduit d'admission, respectivement 11, 12 et 13.

Dans cette représentation, un conduit d'échappement 14, 15, 16 des gaz de combustion générés par le moteur 1 débouche de chaque cylindre 2, 3 et 4. Les trois conduits d'échappement 14, 15, 16 débouchent vers un conduit commun 17 connecté à un dispositif de traitement 18 des gaz de combustion générés par le moteur 1.

En outre, le dispositif de traitement 18 actif à partir d'une température de mise en action correspond, par exemple, à un catalyseur trois voies pour le traitement simultané d'oxyde d'azote, de monoxyde de carbone et d'hydrocarbure. D'autres types de dispositifs de traitement 18 sont envisageables en variante : par exemple, il peut s'agir, de manière non limitative, d'un piège à oxydes d'azote. Par exemple, si le moteur est du type à allumage par compression, il peut s'agir d'un catalyseur d'oxydation. En outre, le dispositif de traitement 18 comprend des moyens de détermination 21 de la température du dispositif 18, par exemple un capteur de température 21. En variante très courante, il peut aussi s'agir d'un modèle qui est par exemple une fonction d'un ensemble de paramètres de fonctionnement du moteur, comprenant au moins le régime du moteur, le couple du moteur, et, une température du liquide de refroidissement du moteur, permettant d'obtenir la température du catalyseur 18.

Dans l'exemple illustré, le dispositif de traitement 18 est disposé en amont d'un pot d'échappement 19 destiné à l'échappement des gaz traités 20 par le dispositif de traitement 18.

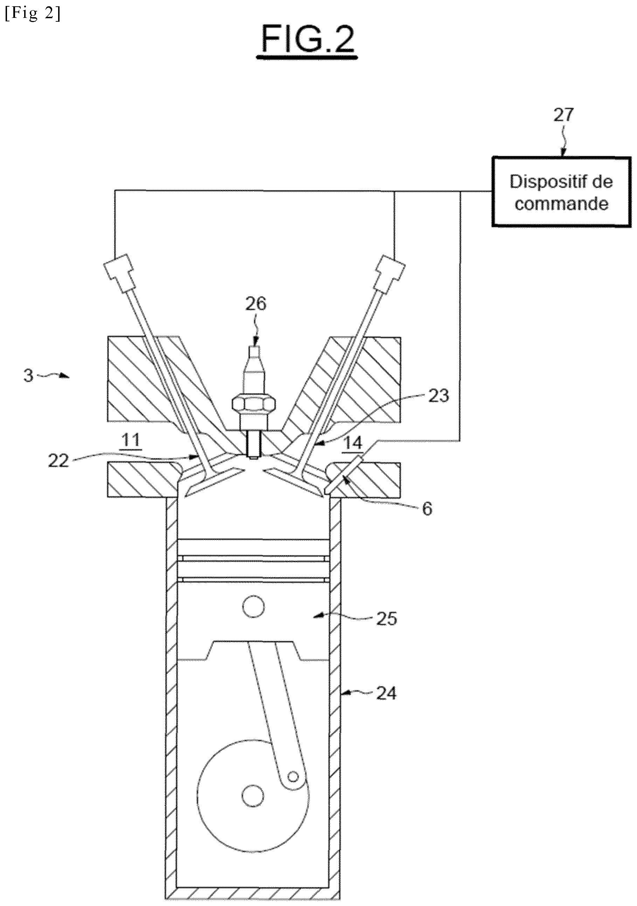

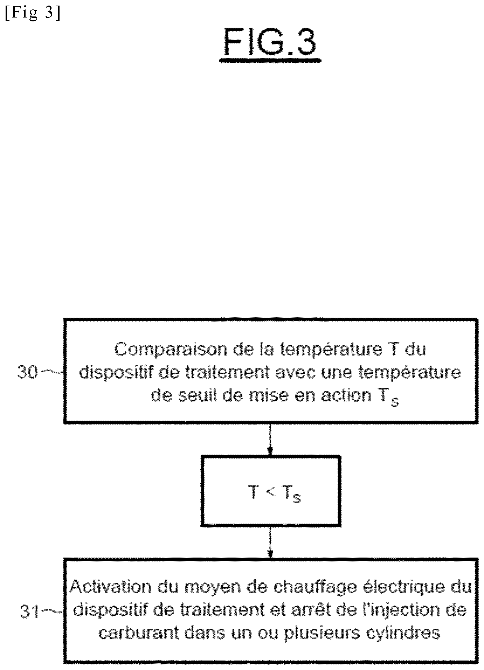

La figure 2 illustre une vue en coupe d'un des cylindres 2, 3, 4 du moteur 1. Dans l'exemple illustré, les trois cylindres 2, 3 et 4 sont configurés de manière similaire. Le cylindre 2 représenté comprend une chambre de combustion 24, un piston 25 et une bougie d'allumage 26.

En outre, le cylindre 2 comprend une soupape 22 d'admission d'air et une soupape 23 d'échappement des gaz de combustion générés par le moteur 1. Bien entendu, il peut être envisagé que chaque cylindre 2, 3 et 4 soit pourvu de soupape d'admission 22 et de soupape d'échappement 23 supplémentaires. Les soupapes 22 et 23 sont représentées à l'état ouvert.

Tel que cela est illustré aux figures 1 et 2, les injecteurs de carburant 6, 7 et 8 sont reliés à un dispositif de commande 27.

De préférence, les soupapes d'admission 22, les soupapes d'échappement 23, ainsi que le capteur de température 21 sont également liés au dispositif de commande 27.

De plus, le dispositif de traction comprend un moyen de chauffage électrique 28 du dispositif de traitement 18. Dans l'exemple illustré, le dispositif de traitement 18 comprend une grille chauffante 28 disposée en regard d'un monolithe 29 du dispositif de traitement 18.

La température T du dispositif de traitement des gaz de combustion est comparée à la température de seuil de mise en action T_{S}.

La température du catalyseur est généralement inférieure à sa température de seuil de mise en action lorsque le moteur 1 est froid, ce qui est notamment le cas lors du démarrage et des premières secondes de fonctionnement de ce dernier.

Lorsque la température T du dispositif de traitement 18 des gaz de combustion est inférieure à sa température de seuil de mise en action T_{S}, on active dans une étape 30 le moyen de chauffage du dispositif de traitement et on coupe l'alimentation en carburant dans un ou plusieurs des cylindres 2, 3 et 4.

En revanche, le fonctionnement des soupapes d'admission 22 et d'échappement 23 est maintenu inchangé et les soupapes s'ouvrent et se ferment selon un fonctionnement normal du moteur.

Dans l'exemple illustré, le moyen de chauffage 28 est activé par le dispositif de commande 27 qui coupe l'injection de carburant dans un des cylindres, le cylindre 2.

De préférence, s'agissant dans l'exemple illustré d'un moteur à allumage commandé, on coupe également l'allumage des bougies dans les cylindres où l'injection de carburant est coupée. Seules l'ouverture et la fermeture des soupapes d'admission 22 et d'échappement 23 continuent de fonctionner normalement.

Dans cette configuration, l'air 10 injecté dans le conduit d'admission 11 passe, via le cylindre 2, vers le conduit d'échappement 14 lorsque les soupapes d'admission 22 et d'échappement 23 s'ouvrent conformément à un fonctionnement normal du moteur. L'air peut alors se diriger vers le dispositif de traitement 18.

L'alimentation en carburant de tous les cylindres 2, 3, 4 est rétablie lorsque le dispositif de traitement 18 atteint sa température de seuil de mise en action, à partir de laquelle il traite efficacement les émissions polluantes du moteur 1.

Bien entendu, il est possible de couper l'alimentation en carburant dans plusieurs des cylindres 2, 3, 4.

L'ouverture des soupapes d'admission 22 et d'échappement 23 des cylindres non alimentés en carburant permet ainsi le passage d'air vers le dispositif de traitement 18. Cette augmentation du débit d'air et son contact avec le moyen de chauffage 18 ont pour conséquence de favoriser les échanges thermiques entre le moyen de chauffage 28, ici une grille chauffante, et le monolithe catalyseur 18 ce qui conduit à l'augmentation plus rapide de la température du dispositif de traitement 18. Le dispositif de traitement 18, en particulier le monolithe, atteint plus vite sa température de seuil de mise en action T_{S} et la production d'hydrocarbures est diminuée. Il en résulte une émission réduite des gaz polluants.

L'augmentation du débit d'air dans le dispositif de traitement 18 est ainsi réalisée sans modification du dispositif de traction, ni incorporation d'élément additionnel. En outre, le procédé de commande selon l'invention est applicable à la fois à des moteurs à injection directe et à injection indirecte.

Par ailleurs, on pourra prévoir que le dispositif de commande 27 soit apte à contrôler le pourcentage d'ouverture des soupapes d'admission 22 et d'échappement 23 des cylindres 2, 3, 4 dont l'alimentation en carburant est coupée. De cette manière, on pourra ouvrir soit totalement, soit partiellement les soupapes 22, 23.

De plus, le dispositif de commande 27 peut être configuré pour contrôler l'arrêt de l'alimentation en carburant dans un ou plusieurs des cylindres en fonction d'une consigne de couple du dispositif de traction.

Pour cela, le dispositif de commande 27 calcule la consigne de couple du dispositif de traction en fonction du régime du dispositif de traction et de l'enfoncement d'une pédale d'accélérateur déterminés au préalable.

Dans le cas d'un véhicule automobile hybride, le dispositif de commande 27 pourra également être configuré pour contrôler la répartition du couple du dispositif de traction à fournir entre un moteur électrique et le moteur à combustion interne, lorsque la température du dispositif de traitement est inférieure à la température de seuil de mise en action.

Par exemple, le dispositif de commande 27 coupe l'alimentation en carburant dans l'ensemble des cylindres 2, 3, 4 du moteur à combustion interne 1 et la totalité du couple du dispositif de traction est fournie par le moteur électrique, lorsque la température du dispositif de traitement est inférieure à la température de seuil de mise en action.

Le moteur électrique fonctionne seul tant que le dispositif de traitement 18 n'est pas actif et capable de traiter les polluants émis par le moteur à combustion interne en fonctionnement, et le couple du dispositif de traction est assuré sans émission de polluants.

En outre, on pourra prévoir que le dispositif de commande 27 détermine l'écart entre la température T du dispositif de traitement et la température de seuil de mise en action T_{S} et répartit le couple du dispositif de traction à fournir respectivement par le moteur électrique et le moteur à combustion interne en fonction de l'écart de température déterminé.

Par exemple, plus la température T du dispositif de traitement 18 se rapproche de sa température de seuil de mise en action T_{S}, c'est-à-dire plus l'écart de température déterminé diminue, plus le couple à fournir par le dispositif de traction sera attribué par le dispositif de commande 27 au moteur à combustion interne 1 qui rétablit progressivement l'injection de carburant dans la pluralité de cylindres 2, 3, 4. Le moteur à combustion interne 1 démarre alors progressivement avec une émission de polluants ainsi minimisée.

On pourra également prévoir que le procédé de commande décrit précédemment soit mis en oeuvre sur un moteur autre qu'un moteur de véhicule automobile.

## Revendications

1. Procédé de commande d'un dispositif de traction pour véhicule automobile comprenant un moteur à combustion interne (1), le moteur (1) comportant une pluralité de cylindres (2, 3, 4) chacun pourvu d'au moins une soupape d'admission d'air (22), d'au moins une soupape d'échappement (23) des gaz de combustion générés par le moteur à combustion interne (1) et d'un injecteur de carburant (6, 7, 8), et un dispositif de traitement (18) des gaz de combustion actif à partir d'une température de mise en action (T_{S}), ledit dispositif de traitement (18) étant placé en aval de la soupape d'échappement (23), le dispositif de traction comprenant un dispositif de commande (27), et on compare (30) la température (T) du dispositif de traitement (18) des gaz de combustion avec une température de seuil de mise en action (T_{S}) et tant que la température (T) du dispositif de traitement (18) des gaz de combustion est inférieure à la température de seuil (T_{S}) on coupe l'alimentation en carburant dans un ou plusieurs des cylindres (2) du moteur (1), **caractérisé en ce que** le dispositif de traction comprend en outre un moyen de chauffage électrique (28) du dispositif de traitement (18) des gaz de combustion et tant que la température (T) du dispositif de traitement (18) des gaz de combustion est inférieure à la température de seuil (T_{S}) on active (31) le moyen de chauffage (28) du dispositif de traitement (18) des gaz de combustion.

2. Procédé selon la revendication 1, **caractérisé en ce que** le dispositif de commande (27) réalise les étapes suivantes :
la détermination du régime du dispositif de traction et de l'enfoncement d'une pédale d'accélérateur ;
le calcul d'une consigne de couple du dispositif de traction en fonction du régime du dispositif de traction et de l'enfoncement de la pédale déterminés ; et
le contrôle de l'arrêt de l'alimentation en carburant d'un ou plusieurs des cylindres (2) en fonction de la consigne de couple du dispositif de traction calculée.

3. Procédé selon l'une des revendications 1 ou 2, **caractérisé en ce qu'**il comprend le contrôle par le dispositif de commande (27) du pourcentage d'ouverture des soupapes d'admission (22) et d'échappement (23) des cylindres (2) dont l'alimentation en carburant est coupée.

4. Procédé selon l'une quelconque des revendications précédentes, **caractérisé en ce qu'**il comprend la répartition par le dispositif de commande (27) du couple du dispositif de traction à fournir entre un moteur électrique du dispositif de traction et le moteur à combustion interne (1), lorsque la température (T) du dispositif de traitement (18) est inférieure à la température de seuil de mise en action (T_{S}).

5. Procédé selon la revendication 4, caractérisé en que le dispositif de commande (27) coupe l'alimentation en carburant dans l'ensemble des cylindres (2, 3, 4) du moteur à combustion interne (1) et la totalité du couple du dispositif de traction est fournie par le moteur électrique, lorsque la température (T) du dispositif de traitement (18) est inférieure à la température de seuil de mise en action (T_{S}).

6. Procédé selon la revendication 4 ou 5, **caractérisé en ce qu'**il comprend la détermination par le dispositif de commande (27) de l'écart entre la température (T) du dispositif de traitement (18) et la température de seuil de mise en action (T_{S}) et la répartition du couple du dispositif de traction à fournir respectivement par le moteur électrique et le moteur à combustion interne (1) en fonction de l'écart déterminé.

7. Dispositif de traction pour véhicule automobile comprenant un moteur à combustion interne (1), le moteur (1) comportant une pluralité de cylindres (2, 3, 4) chacun pourvu d'au moins une soupape d'admission d'air (22), d'au moins une soupape d'échappement (23) des gaz de combustion générés par le moteur (1) et d'un injecteur de carburant (5, 6, 7), et un dispositif de traitement (18) des gaz de combustion actif à partir d'une température de mise en action (T_{S}), ledit dispositif de traitement (18) étant placé en aval de la soupape d'échappement (23), le dispositif de traction comprenant en outre un capteur de température (21) configuré pour relever la température dudit dispositif de traitement (18) et un dispositif de commande (27) configuré pour couper l'alimentation en carburant dans un ou plusieurs des cylindres (2) du moteur, tant que la température (T) du dispositif de traitement est inférieure à une température de seuil de mise en action (T_{S}), **caractérisé en ce qu'**il comprend un moyen de chauffage électrique (28) dudit dispositif de traitement (18), le dispositif de commande (27) étant configuré pour activer le moyen de chauffage (28) du dispositif de traitement (18) tant que la température (T) du dispositif de traitement est inférieure à une température de seuil de mise en action (T_{S}).

8. Dispositif de traction selon la revendication 7, **caractérisé en ce que** le dispositif de commande est configuré pour :
déterminer le régime du dispositif de traction et de l'enfoncement d'une pédale d'accélérateur ;
calculer une consigne de couple du dispositif de traction en fonction du régime et de l'enfoncement déterminés ; et
contrôler l'arrêt de l'alimentation en carburant dans un ou plusieurs des cylindres (2) en fonction de la consigne de couple du dispositif de traction calculée.

9. Dispositif de traction selon la revendication 7 ou 8, **caractérisé en ce que** le dispositif de commande (27) est apte à contrôler le pourcentage d'ouverture des soupapes d'admission (22) et d'échappement (23) des cylindres (2) dont l'alimentation en carburant est coupée.

10. Dispositif de traction selon l'une quelconque des revendications 7 à 9, **caractérisé en ce qu'**il comprend un moteur électrique, le dispositif de commande (27) étant configuré pour ordonner la traction du véhicule automobile au moins en partie par un moteur électrique, tant que la température (T) du dispositif de traitement (18) est inférieure à la température de seuil de mise en action (T_{S}).

11. Dispositif de traction selon la revendication 10, **caractérisé en ce que** le dispositif de commande (27) est configuré pour couper l'alimentation en carburant dans l'ensemble des cylindres (2, 3, 4) du moteur à combustion interne (1) et ordonner la fourniture de la totalité du couple du dispositif de traction par le moteur électrique, lorsque la température (T) du dispositif de traitement (18) est inférieure à la température de seuil de mise en action (T_{S}).

12. Dispositif de traction selon la revendication 10 ou 11, **caractérisé en ce que** le dispositif de commande (27) est configuré pour déterminer l'écart entre la température (T) du dispositif de traitement (18) et la température de seuil de mise en action (T_{S}) et déterminer la répartition du couple à fournir respectivement par le moteur électrique et le moteur à combustion interne (1) en fonction de l'écart déterminé.

13. Véhicule automobile comprenant un dispositif de traction selon l'une quelconque des revendications 7 à 12.

## Patentansprüche

1. Verfahren zur Steuerung einer Antriebsvorrichtung für ein einen Verbrennungsmotor (1) enthaltendes Kraftfahrzeug, wobei der Motor (1) eine Vielzahl von Zylindern (2, 3, 4), die je mit mindestens einem Lufteinlassventil (22), mindestens einem Auslassventil (23) der vom Verbrennungsmotor (1) erzeugten Abgase und einer Kraftstoffeinspritzdüse (6, 7, 8) versehen sind, und eine Verarbeitungsvorrichtung (18) der Abgase aufweist, die ausgehend von einer Anspringtemperatur (T_{S}) aktiv ist, wobei die Verarbeitungsvorrichtung (18) dem Auslassventil (23) nachgelagert ist, wobei die Antriebsvorrichtung eine Steuervorrichtung (27) enthält, und die Temperatur (T) der Verarbeitungsvorrichtung (18) der Abgase mit einer Anspringschwellentemperatur (T_{S}) verglichen wird (30), und so lange die Temperatur (T) der Verarbeitungsvorrichtung (18) der Abgase niedriger ist als die Schwellentemperatur (T_{S}), die Kraftstoffversorgung in einem oder mehreren der Zylinder (2) des Motors (1) unterbrochen wird, **dadurch gekennzeichnet, dass** die Antriebsvorrichtung außerdem eine elektrische Heizeinrichtung (28) der Verarbeitungsvorrichtung (18) der Abgase enthält, und so lange die Temperatur (T) der Verarbeitungsvorrichtung (18) der Abgase niedriger ist als die Schwellentemperatur (T_{S}), die Heizeinrichtung (28) der Verarbeitungsvorrichtung (18) der Abgase aktiviert wird (31) .

2. Verfahren nach Anspruch 1, **dadurch gekennzeichnet, dass** die Steuervorrichtung (27) die folgenden Schritte durchführt:
Bestimmung des Betriebszustands der Antriebsvorrichtung und des Herunterdrückens eines Gaspedals;
Berechnung eines Drehmomentsollwerts der Antriebsvorrichtung abhängig vom bestimmten Betriebszustand der Antriebsvorrichtung und vom bestimmten Herunterdrücken des Pedals; und
die Steuerung des Sperrens der Kraftstoffversorgung eines oder mehrerer der Zylinder (2) abhängig vom berechneten Drehmomentsollwert der Antriebsvorrichtung.

3. Verfahren nach einem der Ansprüche 1 oder 2, **dadurch gekennzeichnet, dass** es die Steuerung durch die Steuervorrichtung (27) des Öffnungsprozentsatzes der Einlass- (22) und Auslassventile (23) der Zylinder (2) enthält, deren Kraftstoffversorgung unterbrochen ist.

4. Verfahren nach einem der vorhergehenden Ansprüche, **dadurch gekennzeichnet, dass** es die Verteilung durch die Steuervorrichtung (27) des zu liefernden Drehmoments der Antriebsvorrichtung zwischen einem Elektromotor der Antriebsvorrichtung und dem Verbrennungsmotor (1) enthält, wenn die Temperatur (T) der Verarbeitungsvorrichtung (18) niedriger ist als die Anspringschwellentemperatur (T_{S}).

5. Verfahren nach Anspruch 4, **dadurch gekennzeichnet, dass** die Steuervorrichtung (27) die Kraftstoffversorgung in der Einheit der Zylinder (2, 3, 4) des Verbrennungsmotor (1) unterbricht und die Gesamtheit des Drehmoments der Antriebsvorrichtung vom Elektromotor geliefert wird, wenn die Temperatur (T) der Verarbeitungsvorrichtung (18) niedriger ist als die Anspringschwellentemperatur (T_{S}).

6. Verfahren nach Anspruch 4 oder 5, **dadurch gekennzeichnet, dass** es die Bestimmung durch die Steuervorrichtung (27) der Abweichung zwischen der Temperatur (T) der Verarbeitungsvorrichtung (18) und der Anspringschwellentemperatur (T_{S}) und die Verteilung des Drehmoments der Antriebsvorrichtung enthält, das vom Elektromotor bzw. vom Verbrennungsmotor (1) abhängig von der bestimmten Abweichung zu liefern ist.

7. Antriebsvorrichtung für ein einen Verbrennungsmotor (1) enthaltendes Kraftfahrzeug, wobei der Motor (1) eine Vielzahl von Zylindern (2, 3, 4), die je mit mindestens einem Lufteinlassventil (22), mindestens einem Auslassventil (23) der vom Verbrennungsmotor (1) erzeugten Abgase und einer Kraftstoffeinspritzdüse (6, 7, 8) versehen sind, und eine Verarbeitungsvorrichtung (18) der Abgase aufweist, die ausgehend von einer Anspringtemperatur (T_{S}) aktiv ist, wobei die Verarbeitungsvorrichtung (18) dem Auslassventil (23) nachgelagert ist, wobei die Antriebsvorrichtung außerdem einen Temperaturfühler (21), der konfiguriert ist, die Temperatur der Verarbeitungsvorrichtung (18) zu erfassen, und eine Steuervorrichtung (27) enthält, die konfiguriert ist, die Kraftstoffversorgung in einem oder mehreren der Zylinder (2) des Motors (1) zu unterbrechen, so lange die Temperatur (T) der Verarbeitungsvorrichtung (18) der Abgase niedriger ist als eine Anspringschwellentemperatur (T_{S}), **dadurch gekennzeichnet, dass** sie eine elektrische Heizeinrichtung (28) der Verarbeitungsvorrichtung (18) enthält, wobei die Steuervorrichtung (27) konfiguriert ist, die Heizeinrichtung (28) der Verarbeitungsvorrichtung (18) zu aktivieren, so lange die Temperatur (T) der Verarbeitungsvorrichtung niedriger ist als eine Anspringschwellentemperatur (T_{S}).

8. Antriebsvorrichtung nach Anspruch 7, **dadurch gekennzeichnet, dass** die Steuervorrichtung konfiguriert ist, um:
den Betriebszustand der Antriebsvorrichtung und des Herunterdrückens eines Gaspedals zu bestimmen;
einen Drehmomentsollwert der Antriebsvorrichtung abhängig vom bestimmten Betriebszustand und vom bestimmten Herunterdrücken zu berechnen; und
das Sperren der Kraftstoffversorgung in einem oder mehreren der Zylinder (2) abhängig vom berechneten Drehmomentsollwert der Antriebsvorrichtung zu steuern.

9. Antriebsvorrichtung nach Anspruch 7 oder 8, **dadurch gekennzeichnet, dass** die Steuervorrichtung (27) geeignet ist, den Öffnungsprozentsatz der Einlass- (22) und Auslassventile (23) der Zylinder (2) zu steuern, deren Kraftstoffversorgung unterbrochen ist.

10. Antriebsvorrichtung nach einem der Ansprüche 7 bis 9, **dadurch gekennzeichnet, dass** sie einen Elektromotor enthält, wobei die Steuervorrichtung (27) konfiguriert ist, den Antrieb des Kraftfahrzeugs mindestens zum Teil von einem Elektromotor anzuordnen, so lange die Temperatur (T) der Verarbeitungsvorrichtung (18) niedriger ist als die Anspringschwellentemperatur (T_{S}).

11. Antriebsvorrichtung nach Anspruch 10, **dadurch gekennzeichnet, dass** die Steuervorrichtung (27) konfiguriert ist, die Kraftstoffversorgung in der Einheit der Zylinder (2, 3, 4) des Verbrennungsmotors (1) zu unterbrechen und das Liefern der Gesamtheit des Drehmoments der Antriebsvorrichtung vom Elektromotor anzuordnen, wenn die Temperatur (T) der Verarbeitungsvorrichtung (18) niedriger ist als die Anspringschwellentemperatur (T_{S}).

12. Antriebsvorrichtung nach Anspruch 10 oder 11, **dadurch gekennzeichnet, dass** die Steuervorrichtung (27) konfiguriert ist, die Abweichung zwischen der Temperatur (T) der Verarbeitungsvorrichtung (18) und der Anspringschwellentemperatur (T_{S}) zu bestimmen und die Verteilung des vom Elektromotor bzw. vom Verbrennungsmotor (1) zu liefernden Drehmoments abhängig von der bestimmten Abweichung zu bestimmen.

13. Kraftfahrzeug, das eine Antriebsvorrichtung nach einem der Ansprüche 7 bis 12 enthält.

## Claims

1. Method for controlling a traction device for a motor vehicle comprising an internal combustion engine (1), the engine (1) comprising a plurality of cylinders (2, 3, 4) each provided with at least one air intake valve (22), with at least one exhaust valve (23) for the combustion gases generated by the internal combustion engine (1) and with a fuel injector (6, 7, 8), and a combustion gas treatment device (18) that is active from an actuation temperature (T_{S}), said treatment device (18) being placed downstream of the exhaust valve (23), the traction device comprising a control device (27), and the temperature (T) of the combustion gas treatment device (18) is compared (30) with an actuation threshold temperature (T_{S}) and, as long as the temperature (T) of the combustion gas treatment device (18) is lower than the threshold temperature (T_{S}), the supply of fuel into one or more of the cylinders (2) of the engine (1) is cut, **characterized in that** the traction device also comprises an electric heating means (28) of the combustion gas treatment device (18) and, as long as the temperature (T) of the combustion gas treatment device (18) is lower than the threshold temperature (T_{S}), the heating means (28) of the combustion gas treatment device (18) is activated (31).

2. Method according to Claim 1, **characterized in that** the control device (27) carries out the following steps:
determining the speed of the traction device and the depression of an accelerator pedal;
calculating a torque setpoint of the traction device as a function of the determined speed of the traction device and depression of the pedal; and
controlling the stopping of the supply of fuel to one or more of the cylinders (2) as a function of the calculated torque setpoint of the traction device.

3. Method according to either of Claims 1 and 2, **characterized in that** it comprises the control, by the control device (27), of the percentage opening of the intake (22) and exhaust (23) valves of the cylinders (2) to which the supply of fuel is cut.

4. Method according to any one of the preceding claims, **characterized in that** it comprises the apportionment, by the control device (27), of the torque of the traction device to be supplied between an electric motor of the traction device and the internal combustion engine (1), when the temperature (T) of the treatment device (18) is lower than the actuation threshold temperature (T_{S}).

5. Method according to Claim 4, **characterized in that** the control device (27) cuts the supply of fuel into all of the cylinders (2, 3, 4) of the internal combustion engine (1) and all of the torque of the traction device is supplied by the electric motor, when the temperature (T) of the treatment device (18) is lower than the actuation threshold temperature (T_{S}).

6. Method according to Claim 4 or 5, **characterized in that** it comprises the determination, by the control device (27), of the difference between the temperature (T) of the treatment device (18) and the actuation threshold temperature (T_{S}) and the apportionment of the torque of the traction device to be supplied respectively by the electric motor and the internal combustion engine (1) as a function of the determined difference.

7. Traction device for a motor vehicle comprising an internal combustion engine (1), the engine (1) comprising a plurality of cylinders (2, 3, 4) each provided with at least one air intake valve (22), with at least one exhaust valve (23) for the combustion gases generated by the engine (1) and with a fuel injector (5, 6, 7), and a combustion gas treatment device (18) that is active from an actuation temperature (T_{S}), said treatment device (18) being placed downstream of the exhaust valve (23), the traction device also comprising a temperature sensor (21) configured to record the temperature of said treatment device (18) and a control device (27) configured to cut the supply of fuel into one or more of the cylinders (2) of the engine, as long as the temperature (T) of the treatment device is lower than an actuation threshold temperature (T_{S}), **characterized in that** it comprises an electric heating means (28) of said treatment device (18), the control device (27) being configured to activate the heating means (28) of the treatment device (18) as long as the temperature (T) of the treatment device is lower than an actuation threshold temperature (Ts) .

8. Traction device according to Claim 7, **characterized in that** the control device is configured to:
determine the speed of the traction device and the depression of an accelerator pedal;
calculate a torque setpoint of the traction device as a function of the determined speed and depression; and
control the stopping of the supply of fuel into one or more of the cylinders (2) as a function of the calculated torque setpoint of the traction device.

9. Traction device according to Claim 7 or 8, **characterized in that** the control device (27) is capable of controlling the percentage opening of the intake (22) and exhaust (23) valves of the cylinders (2) to which the supply of fuel is cut.

10. Traction device according to any one of Claims 7 to 9, **characterized in that** it comprises an electric motor, the control device (27) being configured to order the traction of the motor vehicle at least partly by an electric motor, as long as the temperature (T) of the treatment device (18) is lower than the actuation threshold temperature (T_{S}).

11. Traction device according to Claim 10, **characterized in that** the control device (27) is configured to cut the supply of fuel into all of the cylinders (2, 3, 4) of the internal combustion engine (1) and order the supply of all of the torque of the traction device by the electric motor, when the temperature (T) of the treatment device (18) is lower than the actuation threshold temperature (Ts) .

12. Traction device according to Claim 10 or 11, **characterized in that** the control device (27) is configured to determine the difference between the temperature (T) of the treatment device (18) and the actuation threshold temperature (T_{S}) and determine the apportionment of the torque to be supplied respectively by the electric motor and the internal combustion engine (1) as a function of the determined difference.

13. Motor vehicle comprising a traction device according to any one of Claims 7 to 12.
